# EUROPÄISCHE PATENTSCHRIFT

(11) **EP 0 521 970 B1**
(45) Veröffentlichungstag und Bekanntmachung des Hinweises auf die Patenterteilung: **04.10.1995**
(21) Anmeldenummer: 91906777.7
(22) Anmeldetag: 22.03.1991
(51) Int. Cl.: C08B 37/16, C08F 251/00, B01J 20/26

(54) **WASSERUNLÖSLICHE CYCLODEXTRIN-POLYMERISATE UND VERFAHREN ZU DEREN HERSTELLUNG**
WATER-INSOLUBLE CYCLODEXTRIN POLYMERIZATES AND PROCESS FOR PRODUCING THEM
POLYMERES DE CYCLODEXTRINE INSOLUBLES DANS L'EAU ET LEUR PROCEDE DE PRODUCTION

(30) Priorität: 27.03.1990 DE 4009825
(43) Veröffentlichungstag der Anmeldung: 13.01.1993
(73) Patentinhaber: Consortium für elektrochemische Industrie GmbH, D-81379 München (DE)
(72) Erfinder: NUSSSTEIN, Peter, D-8000 München 50 (DE); STAUDINGER, Günther, D-8000 München 2 (DE); KREUZER, Franz-Heinrich, D-8033 Martinsried (DE); SCHMITT-SODY, Wolfgang, D-8190 Wolfratshausen (DE)
(86) Internationale Anmeldenummer: EP9100562
(87) Internationale Veröffentlichungsnummer: WO9114710

(56) Entgegenhaltungen:
- EP-A- 0 309 404
- FR-A- 2 334 691
- US-A- 3 453 260
- US-A- 3 565 887
- Römpps Chemie-Lexikon, 8. Aufl., Bd. 1, Franckh'sche Verlagshandlung, Stuttgart 1979, Seite 55

## Beschreibung

Die Erfindung betrifft wasserunlösliche Cyclodextrinperlpolymerisate, die durch radikalische Polymerisation von Cyclodextrinderivaten mit polymerisierbaren Gruppen entstehen und Verfahren zu deren Herstellung.

Cyclodextrine sind cyclische, nicht reduzierende Oligosaccharide, bestehend aus α-D-Glucoseeinheiten, die ausschließlich 1,4-glucosidisch verknüpft sind. In größeren Mengen sind zur Zeit α-, β- und γ-Cyclodextrin zugänglich, die aus 6, 7 bzw. 8 Anhydroglucoseeinheiten aufgebaut sind. Die interessanteste Eigenschaft der Cyclodextrine ist ihre Fähigkeit zur Ausbildung von Einschlußkomplexen (Wirts-Gast-Verbindungen). Dabei werden hydrophobe Gastmoleküle geeigneter Größe in der Cyclodextrin-Kavität eingeschlossen und durch hydrophobe Wechselwirkungen, van der Waals Kräfte und teilweise auch Wasserstoffbrückenbindungen reversibel gebunden. Auf der Ausbildung dieser Einschlußkomplexe beruhen auch die weitaus meisten Anwendungen von Cyclodextrinen. So eignen sie sich beispielsweise zu chromatographischen Trennungen, als Katalysatoren, als Stabilisatoren, zur Solubilisierung oder zur Überführung von flüssigen Stoffen in den festen Aggregatszustand.

Da Cyclodextrine aufgrund ihrer chiralen C-Atome als enantionselektive Rezeptoren fungieren können, sind unter Beteiligung von Cyclodextrin-Einschlußverbindungen auch chromatographische Trennungen von geeigneten Enantiomeren möglich. Aufgrund dieser selektiven Rezeptoreigenschaften kann durch Cyclodextrine auch die Stereoselektivität von chemischen Reaktionen erhöht werden. Bei der Verwendung von gelöstem Cyclodextrin als Trenn- oder Extraktionsmittel bzw. als Katalysator ist jedoch die Abtrennung der Einschlußverbindung aus dem System und das Freisetzen der eingeschlossenen Verbindung aus dem Cyclodextrin schwierig. Daher ist eine Immobilisierung von Cyclodextrinen unter Erhaltung ihrer Einschlußfähigkeit vorteilhaft. Immobilisierte Cyclodextrine können beispielsweise als stationäre Phase bei Trennprozessen in der Chromatographie Verwendung finden. Bisher wurde eine Immobilisierung von Cyclodextrinen auf unterschiedlichste Weise versucht. Alle vorbeschriebenen Immobilisierungmethoden weisen jedoch Mängel auf.

Unlösliche (immobilisierte) Cyclodextrine und ihre Anwendung in Trennprozessen sind bereits von Solms und Egli beschrieben worden (Helv. Chim. Acta 48, 1225 (1965)). J. Szejtli et al. beschreiben in der deutschen Patentschrift DE 29 27 733 Cyclodextrin-Polyvinylalkohol-Polymere und ein Verfahren zu deren Herstellung. Diese weisen gegenüber den schon vorher bekannten Cyclodextringelen etwas verbesserte mechanische Eigenschaften auf.

P. E. Shaw und C. W. Wilson beschreiben in J. Food Sci. 48, 646, (1983) die Anwendung solcher Cyclodextrin-Polymere zur Abtrennung von Bitterstoffen aus Citrussäften.

A. Ujhazy und J. Szejtli beschreiben in Gordian 89 (3), 43 (1989) ebenfalls die Abtrennung eines Bitterstoffes (Naringin) aus wäßrigen Lösungen mit Hilfe eines Cyclodextrinperlpolymerisats.

Bei den erwähnten schon bekannten Cyclodextringelen wird die Immobilisierung der Cyclodextrine durch bifunktionelle Vernetzerbausteine erreicht. Dabei entsteht ein dreidimensionales, hydrophiles, in Wasser quellbares Cyclodextrinnetzwerk. Mittels einer der inversen Suspensionspolymerisation verwandten Methode kann perlförmiges Material erhalten werden. Als Vernetzerbausteine werden vorzugsweise Epichlorhydrin oder Diepoxyverbindungen eingesetzt. Alle auf diese Weise hergestellten bisher beschriebenen Cyclodextrin-Polymere sind jedoch zur Füllung von Säulen, die bei einem deutlich höheren als Atmosphärendruck betrieben werden, ungeeignet, da bereits bei einem Druck von 3 bar eine derartige Verformung der Füllkörper eintritt, daß die Durchflußraten einer gefüllten Säule niedrig sind. Auch bei einer Druckerhöhung steigen die Durchflußraten wegen der Weichheit des Materials nicht wesentlich an. Hohe Durchflußraten sind jedoch aus Gründen der Wirtschaftlichkeit wünschenswert. Ferner kann man durch eine Druckerhöhung bei gegebenem Säulenfüllmaterial auch eine Erhöhung der Trenneffizienz erreichen.

Um ein cyclodextrinhaltiges Material zu erhalten, das als Säulenfüllmaterial für höhere Drücke geeignet ist, wurde noch ein anderes Verfahren vorgeschlagen, bei dem im Gegensatz zu dem bereits genannten Vorschlag Cyclodextrinmoleküle direkt oder über einen Spacer mit einem druckstabilen, perlförmigen Stammpolymer verbunden werden.

D. W. Armstrong beschreibt in der US-Patentschrift US 4 539 399 die Fixierung von Cyclodextrinen auf Silicagel als Stützmaterial mit Hilfe von Verknüpfungsreagenzien, wie z. B. 3-Glycidoxypropyltrimethoxysilan. Der entscheidende Nachteil dieser Materialien ist ihr niedriger Cyclodextrinanteil. So eignen sich diese Produkte zwar für analytische Zwecke, für einen präparativen Einsatz sind sie aufgrund ihrer geringen Kapazität jedoch völlig ungeeignet.

In der japanischen Patentanmeldung JP 63 314 201 (CA 110 (1989): 175 437 q) wird die Immobilisierung von Cyclodextrinen durch Fixierung auf ein Copolymer beschrieben, das aus einem Glycidylmonovinylester (z. B. Glycidylmethacrylat) oder einem Glycidylmonovinylether (z. B. Allylglycidylether) und Ethylenglykoldimethylacrylat besteht. Die Fixierung der Cyclodextrine erfolgt dabei durch eine HCl-Behandlung des Copolymers bei der die Epoxidringe des Glycidylrestes geöffnet werden und anschließender Umsetzung dieses Zwischenproduktes mit einer basischen Cyclodextrinlösung. Derart hergestellte Materialien besitzen jedoch mehrere Mängel. Neben ihrem niedrigen Cyclodextrinanteil ist auch die Immobilisierungsausbeute bezogen auf β-Cyclodextrin gering. Daneben ist der hohe Anteil an relativ hydrophobem Trägerpolymer ein entscheidender Nachteil. Dieser hohe Anteil an hydrophoben Stellen außerhalb der Cyclodextrinkavitäten führt zu unselektiven Adsorptionen von hydrophoben Substanzen aus der zu behandelnden Lösung. Das hat zur Folge, daß bei der Desorption oder Eluierung diese unselektiv adsorbierten Substanzen mit denjenigen vermischt werden, die selektiv an Cyclodextrineinheiten gebunden waren.

J. Szejtli gibt in "Cyclodextrin Technology" (Kluwer Academic Publishers) 1988, S. 59 ff einen umfassenden Überblick über die bisher beschriebenen Versuche zur Immobilisierung von Cyclodextrinen. Alle diese Versuche, in Wasser quellbare Materialien herzustellen, ergaben jedoch Produkte, die entweder eine nur mäßige mechanische Stabilität aufweisen oder aber einen geringen Cyclodextrinanteil besitzen. In manchen Fällen ist der Herstellungsprozeß zudem so schwierig und teuer, daß eine industrielle Nutzung ausgeschlossen erscheint.

Die US-A 3565887 betrifft ungesättigte Ester von Cyclodextrin. Die Möglichkeit der Polymerisation solcher Verbindungen wird nur angedeutet und die Verwendung als Säulenfüllmaterial nicht erwähnt.

Die FR-A 2334691 beschreibt Dextran-Gele. Solchen Verbindungen fehlt im Gegensatz zu Cyclodextrin-Derivaten die Fähigkeit zur Inklusion in einer Kavität.

Die EP-A 309404 betrifft Copolymere von Methacrylat mit vinyl- oder allylsubstituierten Cyclodextrinen und deren Verwendung in pharmazeutischen Formulierungen.

Von A. Harada, M. Furue und S. Nozakura wurde in Macromolecules 9, 701 (1976) die Darstellung von Cyclodextrinacrylaten und ihre radikalische Polymerisation zu löslichen Polymeren beschrieben. Die Synthese der polymerisierbaren Cyclodextrinderivate erfolgte dabei nach der Benderschen Methode durch Umsetzung von β-Cyclodextrin mit m-Nitrophenylacrylat und anschließender chromatographischer Reinigung. Derartige Synthesen, die zu monofunktionellen Cyclodextrinderivaten führen, sind für technische Zwecke jedoch viel zu aufwendig. Ferner sind nur lösliche Produkte bei ihrer Polymersation beschrieben.

Aufgabe der Erfindung war es, einfach herzustellende, wasserunlösliche, Cyclodextrin-Polymerisate zu entwickeln, die bei einem hohen Cyclodextrinanteil gleichzeitig verbesserte mechanische Eigenschaften gegenüber vergleichbaren, bereits bekannten Polymeren besitzen. Die neuen wasserunlöslichen Polymere sollten außerdem hydrophil, und damit in Wasser quellbar, sein.

Gegenstand der Erfindung sind wasserunlösliche, hydrophile Homo- oder Copolymerisate von mit Glycerylmethacrylat substituierten Cyclodextrinen oder Hydroxyalkylcyclodextrinen mit C₂- bis C₄-Hydroxyalkyleinheiten, wobei der DS-Wert für glycerylmethacrylatsubstituenten der substituierten Cyclodextrine oder Hydroxyalkylcyclodextrine jeweils zwischen 0,3 und 0,9 liegt, und Copolymerisate dieser substituierten Cyclodextrin- oder Hydroxyalkylcyclodextrin-Derivate mit wasserlöslichen ethylenisch ungesättigten Comonomeren aus der Gruppe Acrylamid, 1-Vinyl-2-pyrrolidon, Hydroxyethylacrylat und Hydroxyethylmethacrylat, wobei der Cyclodextrin-Anteil in den genannte Polymerisaten mehr als 30 Gew.%, vorzugsweise mehr als 40 Gew.%, bezogen auf das Gesamtpolymer beträgt

Als Ausgangsstoffe zur Herstellung der Glycerylmethacrylatsubstituierten Cyclodextrine oder Hydroxyalkylcyclodextrine eignen sich dabei α-, β- oder γ-Cyclodextrin bzw. Hydroxyalkylcyclodextrine mit C₂- bis C₄-Hydroxyalkyleinheiten, insbesondere Hydroxyethyl- und Hydroxypropylcyclodextrine des α-, β- und γ-Cyclodextrins. Diese werden in bekannter Weise durch Umsetzung des entsprechenden Cyclodextrins mit einem Alkylenoxid, insbesondere mit Ethylenoxid oder Propylenoxid, in einem basischen, wäßrigen Medium erhalten. Die dabei entstehenden Produktgemische, bestehend aus einer Vielzahl an unterschiedlich substituierten Cyclodextrineinheiten, werden üblicherweise mit Hilfe eines MS-Wertes (molarer Substitutionsgrad) charakterisiert. Der MS-Wert gibt dabei an, wie viele Alkylenoxidmoleküle durchschnittlich pro Anhydroglucoseeinheit eines Cyclodextrinmoleküls gebunden sind. Da bei der Reaktion der Cyclodextrine mit Alkylenoxiden im Substituenten jeweils neue OH-Gruppen erzeugt werden, die erneut mit Alkylenoxidmolekülen reagieren können, sind prinzipiell auch MS-Werte größer als 3 möglich. Die Bestimmung des MS-Wertes kann dabei mit Hilfe der ¹H-NMR-Spektroskopie durch einfachen Vergleich der entsprechenden Signalflächen von Cyclodextrinsignalen und Substituentensignalen erfolgen. Für die erfindungsgemäßen Perlpolymerisate sind Hydroxyalkylcyclodextrine mit MS-Werten von 0,5 - 1,0 besonders geeignet.

Zur radikalischen Polymerisation geeignete Cyclodextrinderivate erhält man durch Umsetzung von Cyclodextrinen (α, β oder γ) und Hydroxyalkylcyclodextrinen mit glycidylmethacrylat im Überschuß in basischen organischen Solventien bei Temperaturen von 60 - 100°C. Als Lösungsmittel eignen sich polare aprotische organische Lösungsmittel, beispielsweise N, N-Dimethylformamid, Dimethylsulfoxid oder Pyridin. Als Base können Amine, wie z. B. Triethylamin oder Pyridin eingesetzt werden. Die bei der Umsetzung entstehenden Cyclodextrin- bzw. Hydroxyalkylcyclodextringlycerylmethacrylate können durch einfache Fällung mit flüssigen Kohlenwasserstoffen wie z. B. Toluol und anschließender Filtration isoliert werden. Als Reinigungsvorgang ist lediglich ein einfaches Waschen mit einem aromatischen Kohlenwasserstoff, wie z. B. Toluol, und n-Propanol erforderlich. Die dabei resultierenden Cyclodextrin- bzw. Hydroxyalkylcyclodextrinmethacrylate besitzen eine für die radikalische Polymerisation ausreichende Reinheit.

Die bei der Reaktion mit Glycidylmethacrylat entstandenen Cyclodextrinester bestehen ebenfalls nicht aus strukturell einheitlichen Molekülen, sondern aus einer Vielzahl an unterschiedlich substituierten Cyclodextrineinheiten. Diese für eine Polymerisation hervorragend geeigneten Substanzgemische werden mit Hilfe eines DS-Wertes (durchschnittlicher Substitutionsgrad) charakterisiert. Der DS-Wert (Bestimmung analog dem MS-Wert mittels ¹H-NMR-Spektroskopie) gibt dabei an, wie viele Methacrylatgruppen durchschnittlich pro Anhydroglucoseeinheit eines Cyclodextrinmoleküls vorhanden sind. Prinzipiell sind nach den beschriebenen Methoden Cyclodextringlycerylmethacrylate mit DS-Werten von 0 bis 3 darstellbar. Da für die spätere Polymerisation zu hydrophilen, unlöslichen Perlpolymerisaten jedoch gut wasserlösliche Substanzen erforderlich sind, eignen sich nur Cyclodextringlycerylmethacrylate mit DS-Werten zwischen 0.3 und 0.9. Sowohl Produkte mit niedrigeren, als auch mit höheren Substitutionsgraden bezüglich der Methacrylatgruppen weisen eine für die inverse Suspensionsperlpolymerisation zu geringe Wasserlöslichkeit auf. Für die Herstellung von vernetzten, unlöslichen Polymerisaten sind außerdem mindestens durchschnittlich zwei Methacrylatgruppen pro Cyclodextrineinheit erforderlich. Am besten für eine Vernetzung eignen sich Cyclodextrin- und Hydroxyalkylcyclodextrinmethacrylate mit einem durchschnittlichen Methacrylatsubstitutionsgrad von 0,4 bis 0,5. Solche Produkte besitzen alle eine Wasserlöslichkeit von mehr als 25 % (w/v) und außerdem durchschnittlich mindestens zwei polymerisierbare Gruppen pro Cyclodextrineinheit.

Neben den oben beschriebenen Methoden gelingt die Fixierung von Methacrylatgruppen an Cyclodextrineinheiten durch Umsetzung von Cyclodextrinen oder Hydroxylalkylcyclodextrinen mit Verbindungen des Typs A, wobei die Verbindungen des Typs A im Überschuß eingesetzt werden. Besonders geeignet ist dabei die Umsetzung mit Glycidylmethacrylat (Verbindung des Typs A mit n = 1). 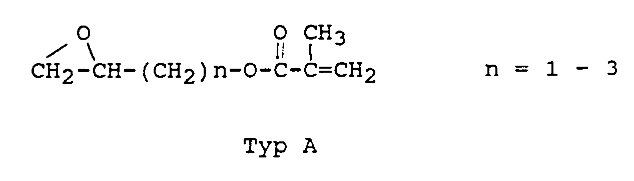
Die basisch katalysierte Reaktion wird vorzugsweise in N,N-Dimethylformamid bei Temperaturen von 60 - 100°C durchgeführt. Als Katalysator kann beispielsweise 1,8-Diazabicyclo[5,4,0] undec-7-en eingesetzt werden. Bei der Reaktion wird der Oxiranring geöffnet und Verbindungen des Typs A werden über eine Etherbindung an die Cyclodextrineinheit gebunden. Die dabei entstehenden Cyclodextrin- bzw. Hydroxyalkylcyclodextringlycerylmethacrylate (für n = 1) können durch einfache Fällung mit Toluol und anschließendem Waschen mit Toluol und Aceton in ausreichender Reinheit isoliert werden. Die Charakterisierung der Produkte erfolgt wiederum durch Bestimmung des durchschnittlichen Substitutionsgrades (DS) mittels ¹H-NMR-Spektroskopie (wobei die Signalflächen der Substituentensignale mit denen der Cyclodextrinsignale verglichen werden). Für eine Polymerisation besonders geeignet sind Reaktionsprodukte aus Cyclodextrinen (α, β und γ) oder Hydroxyalkylcyclodextrinen, vorzugsweise Hydroxyethyl- oder Hydroxypropylcyclodextrinen (mit MS-Werten von 0,5 - 1,0), mit Glycidylmethacrylat, wobei der durchschnittliche Substitutionsgrad für Glycerylmethacrylatsubstituenten zwischen 0.3 und 0.9, vorzugsweise zwischen 0.4 und 0.5, liegen sollte. Derartige Produkte besitzen eine Wasserlöslichkeit von mehr als 30 % (w/v).

Die Herstellung der erfindungsgemäßen Polymere erfolgt durch inverse, radikalische Suspensionsperlpolymerisation. Dabei werden die oben beschriebenen Cyclodextrinderivate mit einem durchschnittlichen Substitutionsgrad an polymerisierbaren Gruppen von 0.3 - 0.9, vorzugsweise von 0,4 bis 0,5, in wäßriger Lösung radikalisch polymerisiert. Die Konzentration der wäßrigen Monomerlösung liegt dabei zwischen 10 und 50 % (w/w). Als Initiatoren werden vorzugsweise wasserlösliche peroxidische Verbindungen, wie beispielsweise Kaliumperoxodisulfat, eingesetzt. Als Dispersionsmittel (äußere Phase) können flüssige aromatische oder aliphatische Kohlenwasserstoffe, wie Toluol, oder n-Decan, Verwendung finden. Das Verhältnis von äußerer (organischer) zu innerer (wäßriger) Phase kann dabei zwischen 1 : 1 und 5 : 1 variiert werden. In einer bevorzugten Ausführungsform werden zur Erzielung von Perlpolymerisaten mit enger Korngrößenverteilung Emulgatoren zugesetzt. Geeignete Emulgatoren sind die in der Suspensionspolymerisation üblichen, wie z. B. Alkylsulfate bzw. Alkylsulfonate mit 8 bis 18 C-Atomen, Alkylsubstituierte oder -ethoxylierte Phosphorsäureester oder Cellulosederivate. Diese Emulgatoren werden vorzugsweise in einer Menge von 0,5 bis 5,0 Gew.%, bezogen auf die Kohlenwasserstoffphase, eingesetzt.

Da bei einem DS-Wert von 0,35 (bezüglich der Methacrylatgruppen) bereits durchschnittlich mindestens zwei polymerisierbare Gruppen pro Cyclodextrineinheit vorhanden sind, entstehen bei der oben beschriebenen Polymerisation vernetzte, unlösliche Produkte. Wegen des niedrigen DS-Wertes von unter 0.9 sind noch eine große Zahl unsubstituierter Hydroxylgruppen der Cyclodextrineinheiten im Polymer vorhanden. Dies führt zu einem hydrophilen, in Wasser quellbaren Polymer.

Die Erfindung betrifft neben den oben beschriebenen Homopolymerisaten auch Mischpolymerisate aus verschiedenen Cyclodextrinderivaten mit wasserlöslichen ethylenisch ungesättigten Comonomeren, wie z. B. Hydroxyethylacrylat, Hydroxyethylmethacrylat, 1-Vinyl-2-pyrrolidon. Ihre Herstellung erfolgt analog der beschriebenen Suspensionsperlpolymerisation, wobei das Verhältnis von polymerisierbarem Cyclodextrinderivat und wasserlöslichem Comonomer von 10 : 1 (w/w) bis 1 : 1 (w/w) reichen kann. Auch die dabei entstehenden Perlpolymerisate sind ausgesprochen hydrophil und in Wasser quellbar.

Überraschenderweise zeigen die auf diese Weise hergestellten Cyclodextrinperlpolymerisate in gequollenem Zustand (in Wasser) deutlich bessere mechanische Eigenschaften als bereits bekannte (gleiche Teilchengröße, gleiches Wasserrückhaltevermögen, gleiches Gelbettvolumen) hydrophile, in Wasser gut quellbare Cyclodextrinpolymere, z. B. wie die nach der deutschen Patentschrift DE 29 27 733 hergestellten, epichlorhydrinvernetzten Cyclodextrinpolymere.

Die erfindungsgemäßen Cyclodextrinperlpolymerisate eignen sich als Säulenfüllmaterial für chromatographische Trennungen von gelösten Substanzen, als Katalysatoren oder zur selektiven Entfernung von hydrophoben Substanzen aus wäßrigen Lösungen.

Die nachfolgenden Beispiele dienen zur weiteren Erläuterung der Erfindung

### Beispiel 1

### β-Cyclodextringlycerylmethacrylat

In 187,5 ml trockenem N,N-Dimethylformamid werden 75 g trockenes β-Cyclodextrin und 0,75 g 1,8-Dicabicyclo[5,4,0]-undec-7-en gelöst. Diese Lösung versetzt man rasch mit 26,3 g Glycidylmethacrylat. Anschließend wird die Reaktionsmischung 2,5 h bei 98°C gerührt. Daraufhin wird auf 25°C abgekühlt und von einer geringen Menge an Feststoff abfiltriert. Das Filtrat versetzt man mit 940 ml Toluol. Das dabei ausfallende β-Cyclodextringlycerylmethacrylat wird abfiltriert, mit 150 ml Toluol und anschließend zweimal mit 250 ml Aceton gewaschen.
Nach 18stündiger Trocknung bei 35°C und einem Druck von 50 mbar erhält man 96 g gut wasserlösliches (> 30 %ig w/v) β-Cyclodextringlycerylmethacrylat (DS = 0,4).
Ausbeute: 95 % bezogen auf β-Cyclodextrin.

### Beispiel 2

### Hydroxypropyl-β-Cyclodextringlycerylmethacrylat

Hydroxypropyl-β-Cyclodextringlycerylmethacrylat wird, wie in Beispiel 1 beschrieben, hergestellt, wobei anstelle des β-Cyclodextrins 91 g Hydroxypropyl-β-Cyclodextrin (MS = 0,6); eingesetzt werden.
Man erhält 112 g gut wasserlösliches (> 30 %ig w/v) Hydroxypropyl-β-Cyclodextringlycerylmethacrylat (MS _{Hydroxypropyl} = 0,6; DS _{Glycerylmethacrylat} = 0,4)
Ausbeute: 95 % bezogen auf Hydroxypropyl-β-Cyclodextrin (MS = 0,6).

### Beispiel 3

### Polymerisation von β-Cyclodextringlycerylmethacrylat

In einem zylindrischen 1 l-Glasgefäß mit Impellerrührer und Heizmantel werden unter N₂-Schutzgas 405 ml n-Decan mit 4,05 g des Emulgiermittels "Gafac RM 510" der Fa. GAF (Deutschland) GmbH, 5020 Frechen, (komplexer Phosphorsäureester) versetzt und bei 70°C und einer Rührerdrehzahl von 750 Upm gerührt.

45 g β-Cyclodextringlycerylmethacrylat (DS = 0,4) werden in 90 g entionisiertem Wasser bei 25°C gelöst und mit 23 g 5 %iger (w/v) wäßriger Kaliumperoxodisulfatlösung versetzt. Diese Lösung gießt man unter Rühren in die n-Decanphase ein. Die entstandene Emulsion wird 2,5 h bei 75°C und 750 Upm gerührt, wobei sich perlförmiges Polymerisat bildet.

Die erhaltene Suspension kühlt man auf 25°C ab und der polymere Feststoff wird abfiltriert, mit 100 ml n-Decan, 150 ml Ethanol, zweimal mit je 150 ml Wasser und schließlich wieder mit 150 ml Ethanol gewaschen. Das Polymer wird 6 h bei 75°C im Vakuum getrocknet.
Man erhält 42 g (Ausbeute: 93 %) Polymerisat in Form gleichmäßiger Perlen mit einer mittleren Teilchengröße von 15 µm. Das Polymersat weist in Wasser eine Quellung von 1,8 g/g sowie ein Gelbettvolumen von 4,2 ml/g auf. Zur Messung der Druckstabilität des entstandenen Cyclodextringels wurde die Durchflußrate von Wasser durch eine mit dem Gel gefüllte Säule (Füllhöhe: 30 cm; ^{o}: 2,5 cm) gemessen. Die Durchflußrate beträgt 35 ml/min bei einem Druck von 10 bar.

### Beispiel 4

### Copolymerisation von β-Cyclodextringlycerylmethacrylat mit Hydroxyethylmethacrylat

Die Polymerisation wird, wie in Beispiel 8 beschrieben, durchgeführt, wobei jedoch als Monomerlösung eine Lösung von 37 g β-Cyclodextringlycerylmethacrylat (DS = 0,4) und 37 g Hydroxyethylmethacrylat in 90 g entionisiertem Wasser, versetzt mit 23 g 5 %iger (w/v), wäßriger Kaliumperoxodisulfatlösung, eingesetzt wird.
Man erhält 70 g (Ausbeute: 95 %) perlförmiges Polymerisat mit einem mittleren Teilchendurchmesser von 40 µm, einer Quellung von 1,2 g/g und einem Gelbettvolumen von 3,8 ml/g. Die Durchflußrate beträgt 200 ml/min bei einem Druck von 10 bar.

### Beispiel 5

### Copolymerisation von β-Cyclodextringlycerylmethacrylat mit Hydroxyethylacrylat

Die Polymerisation wird, wie in Beispiel 17 beschrieben, durchgeführt, wobei jedoch als Monomerlösung eine Lösung von 45 g β-Cyclodextringlycerylmethacrylat (DS = 0,4) und 45 g Hydroxyethylacrylat in 90 g entionisiertem Wasser, versetzt mit 23 g 5 %iger (w/v), wäßriger Kaliumperoxodisulfatlösung, eingesetzt wird.
Man erhält 83 g (Ausbeute: 92 %) perlförmiges Polymerisat mit einem mittleren Teilchendurchmesser von 40 µm, einer Quellung von 2,0 g/g und einem Gelbettvolumen von 6,0 ml/g. Die Durchflußrate beträgt 40 ml/min bei einem Druck von 10 bar.

### Beispiel 6

### Copolymerisation von β-Cyclodextrinmethacrylat mit β-Cyclodextringlycerylmethacrylat

Die Polymerisation wird, wie in Beispiel 17 beschrieben, durchgeführt, wobei jedoch als Monomerlösung 40 g β-Cyclodextrinmethacrylat (DS = 0,4) und 20 g β-Cyclodextringlycerylmethacrylat (DS = 0,4) in 90 g entionisiertem Wasser, versetzt mit 23 g 5 %iger (w/v), wäßriger Kaliumperoxodisulfatlösung, eingesetzt wird.
Man erhält 53 g (Ausbeute: 89 %) eines perlförmiges Polymerisats mit einem mittleren Teilchendurchmesser von 50 µm, einer Quellung von 1,3 g/g und einem Gelbettvolumen von 3,4 ml/g. Die Durchflußrate beträgt 30 ml/min bei einem Druck von 10 bar.

### Beispiel 7

### Polymerisat aus β-Cyclodextrinmethacrylat, β-Cyclodextringlycerylmethacrylat und 1-Vinyl-2-pyrrolidon

Die Polymerisation wird, wie in Beispiel 17 beschrieben, durchgeführt, wobei jedoch als Monomerlösung eine Lösung von 36 g β-Cyclodextrinmethacrylat (DS = 0,4), 36 g β-Cyclodextringlycerylmethacrylat und 18 g 1-Vinyl-2-pyrrolidon in 90 g entionisiertem Wasser, versetzt mit 23 g 5 %iger (w/v), wäßriger Kaliumperoxodisulfatlösung, eingesetzt wird.
Man erhält 83 g (Ausbeute: 92 %) eines perlförmigen Polymerisats mit einem mittleren Teilchendurchmesser von 50 µm, einer Quellung von 1,9 g/g und einem Gelbettvolumen von 4,0 ml/g. Die Durchflußrate beträgt 80 ml/min bei einem Druck von 10 bar.

### Beispiel 8

### Polymerisat aus β-Cyclodextrinmethacrylat, β-Cyclodextringlycerylmethacrylat und Hydroxyethylmethacrylat

Die Polymerisation wird, wie in Beispiel 15 beschrieben, durchgeführt, wobei jedoch als Monomerlösung eine Lösung von 22,5 g β-Cyclodextrinmethacrylat (DS = 0,4), 22,5 g β-Cyclodextringlycerylmethacrylat (DS = 0,4) und 45 g Hydroxyethylmethacrylat in 90 g entionisiertem Wasser, versetzt mit 23 g 5 %iger (w/v) Kaliumperoxodisulfatlösung, eingesetzt wird.
Man erhält 83 g (Ausbeute: 92 %) eines perlförmigen Polymerisats mit einem mittleren Teilchendurchmesser von 50 µm, einer Quellung von 1,2 g/g und einem Gelbettvolumen von 4,9 ml/g. Die Durchflußrate beträgt 150 ml/min bei einem Druck von 10 bar.

Zur Messung der mechanischen Eigenschaften wurde die Durchflußrate von Wasser durch eine mit Cyclodextrinpolymerisat gefüllte Säule in Abhängigkeit vom Druck gemessen. Der Durchmesser der Säule betrug 2,5 cm, die Füllhöhe des in Wasser vorgequollenen Cyclodextrinpolymers 30 cm.

Bei diesen Druckversuchen zeigte sich, daß beispielsweise die von J. Szejtli in DE 29 27 733 beschriebenen Cyclodextrinpolymere, die gegenüber vorher bekannten ähnlichen Polymeren bereits verbesserte mechanische Eigenschaften aufwiesen, bereits bei einem Druck von weniger als 3 bar ihre maximale Durchflußrate aufweisen. Bei weiter steigendem Druck nimmt diese Durchflußrate nicht mehr zu. Die erfindungsgemäßen Cyclodextrinpolymere zeigen dagegen mit zunehmendem Druck einen stetigen Anstieg der Durchflußrate bis mindestens 10 bar. Die absoluten Durchflußraten sind darüber hinaus bei einem Druck von 10 bar deutlich höher als bei dem nach DE 29 27 733 hergestellten Polymeren. Dabei wurden stets Perlpolymerisate mit gleichem Durchmesser, sowie gleichem Wasserrückhaltevermögen (Quellung) und Gelbettvolumen miteinander verglichen.
Figur 1:
   Durchflußrate eines nach DE 2927733 hergestellten, mit Epichlorhydrin vernetzten β-Cyclodextrinpolymers (Quellung 1.5 g/g; Gelbettvolumen 3.2 ml/g; mittlere Teilchengröße 150 µm)
Figur 2:
   Durchflußrate des Copolymeren nach Beispiel 15 (Quellung 1.2 g/g; Gelbettvolumen 3.7 ml/g; mittlere Teilchengröße 75 µm)

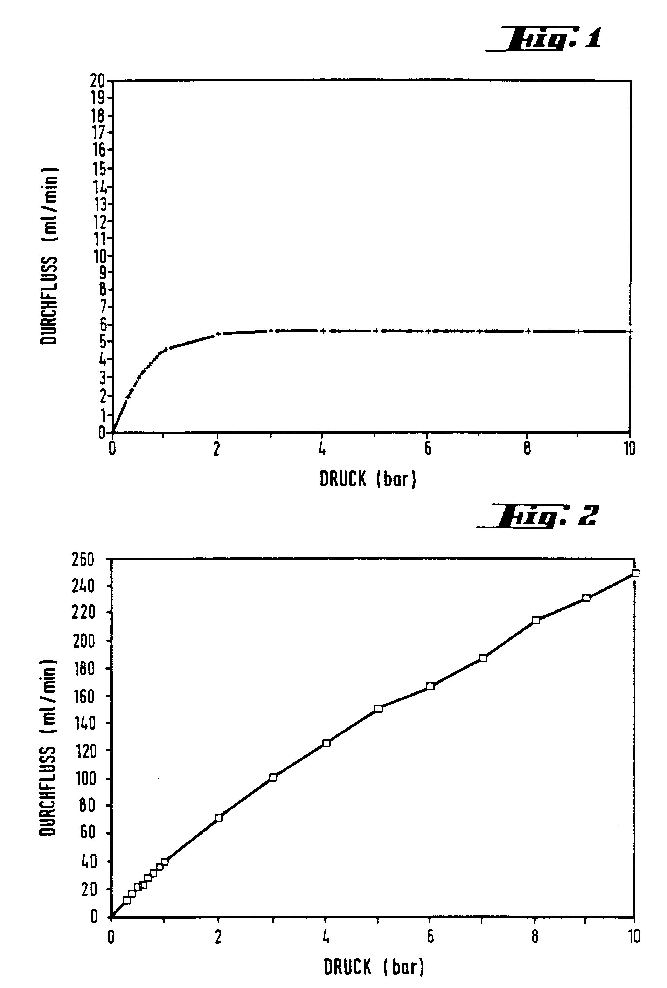

## Patentansprüche (Patentansprüche für folgende(n) Vertragsstaat(en): AT, BE, CH, LI, DE, FR, GB, IT, NL, SE)

1. Wasserunlösliche, hydrophile Homopolymerisate von mit Glycerylmethacrylat substituierten Cyclodextrinen oder Hydroxyalkylcyclodextrinen mit C₂- bis C₄-Hydroxyalkyleinheiten, wobei der DS-Wert für Glycerylmethacrylatsubstituenten der substituierten Cyclodextrine oder Hydroxyalkylcyclodextrine jeweils zwischen 0,3 und 0,9 liegt, oder deren Copolymere mit Comonomeren ausgewählt aus Acrylamid, 1-Vinyl-2-pyrrolidon, Hydroxyethylacrylat und Hydroxyethylmethacrylat, wobei der Cyclodextrinanteil mehr als 30 Gewichts-%, bezogen auf das Gesamtpolymer, beträgt.

2. Verfahren zur Herstellung der Cyclodextrin-Polymerisate gemäß Anspruch 1 durch radikalische Suspensionspolymerisation in einem zweiphasigen Medium aus wäßriger Phase und organischer Kohlenwasserstoff-Phase im Verhältnis von 1 : 1 bis 1 : 5, mit einer Monomerkonzentration in der wäßrigen Phase von 10 bis 50 Gew.%, bezogen auf das Gesamtgewicht der wäßrigen Phase, wobei die Monomerphase Glycerylmethacrylat-substituierte Cyclodextrine und/oder Hydroxyalkylcyclodextrine mit C₂-C₄-Hydroxyalkyleinheiten enthält, jeweils mit einem durchschnittlichen Substitutionsgrad (DS-Wert) für Glycerylmethacrylatsubstituenten zwischen 0,3 und 0,9, und in Gegenwart von wasserlöslichen ethylenisch ungesättigten Comonomeren das Verhältnis von Cyclodextrin- und/oder Hydroxyalkylcyclodextrin-Derivaten zu wasserlöslichem Comonomer von 10 : 1 (w/w) bis 1 : 1 (w/w) beträgt.

3. Verwendung der Cyclodextrin-Polymerisate gemäß den obigen Ansprüchen als Säulenfüllmaterial für chromatographische Trennungen, als Katalysatoren oder zur selektiven Entfernung von hydrophoben Substanzen aus wäßrigen Lösungen.

## Patentansprüche (Patentansprüche für folgende(n) Vertragsstaat(en): ES)

1. Verfahren zur Herstellung von wasserunlöslichen, hydrophilen Homopolymerisaten von mit Glycerylmethacrylat substituierten Cyclodextrinen oder Hydroxyalkylcyclodextrinen mit C₂- bis C₄-Hydroxyalkyleinheiten, wobei der DS-Wert für Glycerylmethacrylatsubstituenten der substituierten Cyclodextrine oder Hydroxyalkylcyclodextrine jeweils zwischen 0,3 und 0,9 liegt, oder deren Copolymere mit Comonomeren ausgewählt aus Acrylamid, 1-Vinyl-2-pyrrolidon, Hydroxyethylacrylat und Hydroxyethylmethacrylat, wobei der Cyclodextrinanteil mehr als 30 Gewichts-% , bezogen auf das Gesamtpolymer beträgt, durch radikalische Suspensionspolymerisation in einem zweiphasigen Medium aus wäßriger Phase und organischer Kohlenwasserstoff-Phase.

2. Verfahren nach Anspruch 1, dadurch gekennzeichnet, daß die Suspensionspolymerisation in einem zweiphasigen Medium aus wäßriger Phase und organischer Kohlenwasserstoff-Phase im Verhältnis von 1 : 1 bis 1 : 5, mit einer Monomerkonzentration in der wäßrigen Phase von 10 bis 50 Gew.%, bezogen auf das Gesamtgewicht der wäßrigen Phase, durchgeführt wird, wobei die Monomerphase Glycerylmethacrylat substituierte Cyclodextrinen und/oder Hydroxyalkylcyclodextrine mit C₂-C₄-Hydroxyalkyleinheiten enthält, jeweils mit einem durchschnittlichen Substitutionsgrad (DS-Wert) für Glycerylmethacrylatsubstituenten zwischen 0,3 und 0,9, und in Gegenwart von wasserlöslichen ethylenisch ungesättigten Comonomeren das Verhältnis von Cyclodextrin- und/oder Hydroxyalkylcyclodextrin-Derivaten zu wasserlöslichem Comonomeren von 10 : 1 (w/w) bis 1 : 1 (w/w) beträgt.

3. Verwendung der Cyclodextrin-Polymerisate hergestellt gemäß den obigen Ansprüchen als Säulenfüllmaterial für chromatographische Trennungen, als Katalysatoren oder zur selektiven Entfernung von hydrophoben Substanzen aus wäßrigen Lösungen.

## Claims (Claims for the following Contracting State(s): AT, BE, CH, LI, DE, FR, GB, IT, NL, SE)

1. Water-insoluble, hydrophilic homopolymers of glyceryl methacrylate-substituted cyclodextrins or hydroxyalkylcyclodextrins containing C₂ to C₄ hydroxyalkyl units, the DS value for glyceryl methacrylate substituents of the substituted cyclodextrins or hydroxyalkylcyclodextrins in each case lying between 0.3 and 0.9, or copolymers thereof with comonomers selected from acrylamide, 1-vinyl-2-pyrrolidone, hydroxyethyl acrylate and hydroxyethyl methacrylate, the cyclodextrin content being more than 30% by weight, based on the total polymer.

2. Process for the preparation of the cyclodextrin polymers according to Claim 1 by free radical suspension polymerization in a two-phase medium comprising an aqueous phase and an organic hydrocarbon phase in a ratio of 1:1 to 1:5, using a monomer concentration in the aqueous phase of 10 to 50% by weight, based on the total weight of the aqueous phase, the monomer phase containing glyceryl methacrylate-substituted cyclodextrins and/or hydroxyalkylcyclodextrins containing C₂ to C₄ hydroxyalkyl units, in each case having an average degree of substitution (DS value) for glyceryl methacrylate substituents of between 0.3 and 0.9, and in the presence of water-soluble ethylenically unsaturated comonomers, the ratio of cyclodextrin and/or hydroxyalkylcyclodextrin derivatives to water-soluble comonomer being from 10:1 (w/w) to 1:1 (w/w).

3. Use of the cyclodextrin polymers according to the above claims as column packing material for chromatographic separations, as catalysts or for the selective removal of hydrophobic substances from aqueous solutions.

## Claims (Claims for the following Contracting State(s): ES)

1. Process for the preparation of water-insoluble, hydrophilic homopolymers of glyceryl methacrylate-substituted cyclodextrins or hydroxyalkylcyclodextrins containing C₂ to C₄ hydroxyalkyl units, the DS value for glyceryl methacrylate substituents of the substituted cyclodextrins or hydroxyalkylcyclodextrins in each case lying between 0.3 and 0.9, or copolymers thereof with comonomers selected from acrylamide, 1-vinyl-2-pyrrolidone, hydroxyethyl acrylate and hydroxyethyl methacrylate, the cyclodextrin content being more than 30% by weight, based on the total polymer, by free radical suspension polymerization in a two-phase medium comprising an aqueous phase and an organic hydrocarbon phase.

2. Process according to Claim 1, characterized in that the suspension polymerization is carried out in a two-phase medium comprising an aqueous phase and an organic hydrocarbon phase in a ratio of 1:1 to 1:5, using a monomer concentration in the aqueous phase of 10 to 50% by weight, based on the total weight of the aqueous phase, the monomer phase containing glyceryl methacrylate-substituted cyclodextrins and/or hydroxyalkylcyclodextrins containing C₂ to C₄ hydroxyalkyl units, in each case having an average degree of substitution (DS value) for glyceryl methacrylate substituents of between 0.3 and 0.9, and in the presence of water-soluble ethylenically unsaturated comonomers, the ratio of cyclodextrin and/or hydroxyalkylcyclodextrin derivatives to water-soluble comonomer being from 10:1 (w/w) to 1:1 (w/w).

3. Use of the cyclodextrin polymers prepared according to the above claims as column packing material for chromatographic separations, as catalysts or for the selective removal of hydrophobic substances from aqueous solutions.

## Revendications (Revendications pour l'(les) Etat(s) contractant(s) suivant(s): AT, BE, CH, LI, DE, FR, GB, IT, NL, SE)

1. Homopolymérisats hydrophiles insolubles dans l'eau de cyclodextrines substituées par du méthacrylate de glycéryle ou de cyclodextrines hydroxyalkyles ayant des unités hydroxyalkyles en C₂-C₄, la valeur DSM (degré de substitution moyen) pour les substituants de méthacrylate de glycéryle des cyclodextrines substituées ou des cyclodextrines hydroxyalkyles se situant à chaque fois entre 0,3 et 0,9, ou dont leurs copolymères sont choisis avec des comonomères d'acrylamide, de 1-vinyl-2-pyrrolidone, d'acrylate d'hydroxyéthyle et de méthacrylate d'hydroxyéthyle, la proportion de cyclodextrines étant, par rapport au polymère total, de plus de 30 % en poids.

2. Procédé de préparation de polymérisats de cyclodextrine conformément à la revendication 1 par polymérisation radicalaire en suspension dans un milieu à deux phases en provenance d'une phase aqueuse et d'une phase organique d'hydrocarbures dans un rapport 1 : 1 à 1 : 5, ayant une concentration de monomère dans la phase aqueuse de 10 à 50 % en poids, par rapport au poids total de la phase aqueuse, la phase monomère contenant des cyclodextrines substituées par du méthacrylate de glycéryle et/ou des cyclodextrines hydroxyalkyles ayant des unités hydroxyalkyles en C₂-C₄, à chaque fois avec un degré de substitution moyen (valeur DSM) pour les substituants de méthacrylate de glycéryle entre 0,3 et 0,9 et, en présence de comonomères solubles dans l'eau, éthyléniquement insaturés, le rapport des dérivés de cyclodextrines et/ou de cyclodextrines hydroxyalkyles au comonomère soluble dans l'eau étant de 10 : 1 (poids/poids) à 1 : 1 (poids/poids).

3. Utilisation de polymérisats de cyclodextrine conformément aux revendications précédentes en tant que matériau de remplissage de colonne pour des séparations chromatographiques, en tant que catalyseurs ou pour l'élimination sélective de substances hydrophobes en provenance de solutions aqueuses.

## Revendications (Revendications pour l'(les) Etat(s) contractant(s) suivant(s): ES)

1. Procédé de préparation d'homopolymérisats hydrophiles insolubles dans l'eau de cyclodextrines substituées par du méthacrylate de glycéryle ou de cyclodextrines hydroxyalkyles ayant des unités hydroxyalkyles en C₂-C₄, la valeur DSM (degré de substitution moyen) pour les substituants de méthacrylate de glycéryle des cyclodextrines substituées ou des cyclodextrines hydroxyalkyles se situant à chaque fois entre 0,3 et 0,9, ou dont leurs copolymères sont choisis avec des comonomères d'acrylamide, de 1-vinyl-2-pyrrolidone, d'acrylate d'hydroxyéthyle et de méthacrylate d'hydroxyéthyle, la proportion de cyclodextrines étant, par rapport au polymère total, de plus de 30 % en poids, par polymérisation radicalaire en suspension dans un milieu à deux phases en provenance d'une phase aqueuse et d'une phase organique d'hydrocarbures.

2. Procédé selon la revendication 1, caractérisé en ce que la polymérisation en suspension dans un milieu à deux phases en provenance d'une phase aqueuse et d'une phase organique d'hydrocarbures est effectuée dans un rapport 1 : 1 à 1 : 5, avec une concentration de monomère dans la phase aqueuse de 10 à 50 % en poids, par rapport au poids total de la phase aqueuse, la phase monomère contenant des cyclodextrines substituées par du méthacrylate de glycéryle et/ou des cyclodextrines hydroxyalkyles ayant des unités hydroxyalkyles en C₂-C₄, à chaque fois avec un degré de substitution moyen (valeur DSM) pour les substituants de méthacrylate de glycéryle entre 0,3 et 0,9 et, en présence de comonomères solubles dans l'eau, éthyléniquement insaturés, le rapport des dérivés de cyclodextrines et/ou de cyclodextrines hydroxyalkyles au comonomère soluble dans l'eau étant de 10 : 1 (poids/poids) à 1 : 1 (poids/poids).

3. Utilisation de polymérisats de cyclodextrine conformément aux revendications précédentes en tant que matériau de remplissage de colonne pour des séparations chromatographiques, en tant que catalyseurs ou pour l'élimination sélective de substances hydrophobes en provenance de solutions aqueuses.
